# EUROPÄISCHE PATENTANMELDUNG

(11) **EP 2 770 386 A1**
(43) Veröffentlichungstag der Anmeldung: **27.08.2014**
(21) Anmeldenummer: 13156512.9
(22) Anmeldetag: 25.02.2013
(51) Int. Cl.: G05B 19/042, G05B 19/05, G06F 9/45, G06F 9/445

(54) **Verfahren und Programmiergerät zur Programmierung einer industriellen Automatisierungskomponente**

(71) Anmelder: Siemens Aktiengesellschaft, 80333 München (DE)
(72) Erfinder: Kruser, Jürgen, 68766 Hockenheim (DE)

(57) **Zusammenfassung**

Die Erfindung betrifft ein Verfahren und ein Programmiergerät zur Programmierung einer industriellen Automatisierungskomponente, wobei für die Automatisierungskomponente mehrere Ablaufgruppen (A, B, C) mit jeweiligen Ablaufobjekten (a, ..., k) mittels eines Programmiergerätes bearbeitet und nach einer Freigabe mittels eines Compilers übersetzt und zu der Automatisierungskomponente übertragen werden, wobei jede Ablaufgruppe (A, B, C) mit den jeweiligen Ablaufobjekten (a, ..., k) separat freigebbar, übersetzbar und übertragbar ist. Dabei wird durch das Programmiergerät bei der Bearbeitung der Ablaufgruppen (A, B, C) das Verschieben eines Ablaufobjektes (a, ..., k) von einer ersten zu einer zweiten der Ablaufgruppen (A, B, C) registriert, wobei durch das Programmiergerät bei der Übersetzung und Übertragung einer der Ablaufgruppen (A, B, C) eine automatische Übersetzung und Übertragung der von der Verschiebung getroffenen anderen der Ablaufgruppen (A, B, C) vorgeschlagen oder durchgeführt wird. Dadurch wird sichergestellt, dass beim Übersetzen und Laden einer Ablaufgruppe (A, B, C) durch zwischenzeitliche Änderungen bedingten Änderungen in andere Ablaufgruppen (A, B, C) ebenfalls zu einer Kompilierung und zu einem Laden dieser Ablaufgruppen (A, B, C) führt, wodurch eine inkonsistente Programmierung der Automatisierungskomponente verhindert wird.

## Beschreibung

Die Erfindung betrifft ein Verfahren zur Programmierung einer industriellen Automatisierungskomponente gemäß dem Oberbegriff des Patentanspruchs 1, und ein Programmiergerät zur Programmierung einer industriellen Automatisierungskomponente gemäß dem Oberbegriff des Patentanspruchs 5.

Zur Steuerung industrieller Fertigungsprozesse, von Prozessen in der Chemie-, Pharma- oder Biotechnologie und in zahlreichen andere technischen Gebieten werden regelmäßig speicherprogrammierbare Steuerungen oder ähnliche mikroprozessorgesteuerte Geräte eingesetzt, die im Folgenden auch als Automatisierungskomponenten bezeichnet werden sollen. Die Programmierung der Automatisierungskomponenten geschieht häufig mittels sog. "Engineering-Systeme" oder ähnlicher Systeme, bei denen ein Benutzer, meist mittels einer graphischen Benutzeroberfläche und einer graphisch orientierten "Programmiersprache", ein Anwendungsprogramm erstellt, welches dann übersetzt (kompiliert) und schließlich zu der Automatisierungskomponente übertragen wird, wobei eine anschließende Ausführung des Programms eine industrielle oder sonstige Anwendung zu steuern vermag. Die Gesamtheit der Hilfsmittel zur Programmierung der Automatisierungskomponenten, insbesondere ein System bestehend aus einem Editor, einem Compiler, Linker etc. soll allgemein auch als "Programmiergerät" bezeichnet werden, gleichgültig, ob die einzelnen Komponenten in einem einzigen Gerät vereinigt, oder unter einer einzigen Benutzeroberfläche zusammengefasst sind, oder nicht.

Sowohl in der Fertigungsautomatisierung als auch in der Prozesssteuerung ist es üblich, Programme oder Programmteile zyklisch wiederholt abzuarbeiten, wobei im einfachsten Fall ein komplettes Programm bzw. dessen "Hauptschleife" für jeden Fertigungszyklus einmal durchlaufen wird. In der Realität sind die Programme jedoch häufig derart strukturiert, dass es sowohl Teile gibt, die häufig wiederholt werden, als auch solche, die weniger oft durchlaufen oder aufgerufen werden. Dies führt dazu, dass die einzelnen Bausteine und Bestandteile von Programmen, die oft auch als Funktionen (FC), Funktionsbausteine (FB) oder allgemein als "Ablaufobjekte" bezeichnet werden, zu Teilprogrammen oder Unterprogrammen oder dgl. zusammengefasst werden, wobei diese Programmteile im Folgenden auch als "Ablaufgruppe" bezeichnet werden sollen. Oft wird auch der Begriff "Plan" oder "Ablaufeinheit" verwendet. Jede Ablaufgruppe umfasst dabei eine Anzahl von Ablaufobjekten, die bei einem Aufruf der jeweiligen Ablaufgruppe nacheinander abgearbeitet werden. Eine Ablaufgruppe kann dabei beispielsweise zeitgesteuert wiederholt aufgerufen werden, aber auch ereignisgesteuert oder gesteuert durch eine Benutzereingabe.

Bei der Programmierung einer Automatisierungskomponente oder einer kompletten industriellen Automatisierungsanordnung werden von einem Benutzer oder Programmierer die Programme erstellt, was bedeutet, dass dabei die Ablaufgruppen und deren Aufrufe festgelegt werden, wobei auch die Ablaufgruppen mit den entsprechenden Ablaufobjekten, also den einzelnen Programmbestandteilen, versehen werden. Wie schon erwähnt, kann ein solcher Vorgang praktischer Weise mittels einer graphischen Programmierung erfolgen, wozu mehrere graphischorientierte Programmiersprachen bekannt sind, die beispielsweise nach IEC 61131-3 normiert sind.

Häufig muss nach der Änderung eines Programms das komplette Programm neu kompiliert (übersetzt), zusammengefügt ("gelinkt") und zu der Automatisierungskomponente übertragen werden, wobei der dafür notwendige Aufwand, insbesondere die dafür benötigte Zeit, bei komplexen Anwendungen und Programmen recht hoch sein kann. Bei manchen Automatisierungskomponenten ist vorgesehen, einzelne Funktionsbausteine, also Ablaufobjekte im Sinne der zuvor benannten Terminologie, auf die Automatisierungskomponente zu laden bzw. dort auszutauschen, ohne die komplette Programmierung neu laden zu müssen. Ein solcher Vorgang wird auch als "Delta-Laden" bezeichnet, weil nur diejenigen Funktionsbausteine oder Funktionsblöcke geladen werden, die verändert werden sollen. Analog dazu hat bei manchen Systemen ein Benutzer die Möglichkeit, in einem Projekt eine Ablaufgruppe zu spezifizieren, die mit samt der enthaltenen Ablaufobjekte neu übersetzt (kompiliert) und zu der Automatisierungskomponente Übertragen werden soll, wobei die anderen, bereits geladenen Ablaufgruppen davon unberührt bleiben. Diese Möglichkeit, dass ein Benutzer eine bearbeitete Ablaufgruppe auswählen (selektieren) und (nach der Übersetzung, dem Linken etc.) zur Ausführung bringen kann, wird auch als "selective compile and download" (SCD) bezeichnet.

Mit diesem Verfahren zum selektiven Übersetzen und Laden von Teilprogrammen kann insbesondere der zeitliche Aufwand bei der Programmerstellung und insbesondere bei der Programmpflege deutlich reduziert werden. Andererseits hat sich jedoch gezeigt, dass bei unsachgemäßer Verwendung dieser Möglichkeiten "inkonsistente" Zustände eintreten können, die zu einer Störung der Automatisierungskomponente und damit zu einer Störung der gesteuerten Vorgänge und Prozesse führen können. So ist es beispielsweise möglich, mit einem Editor Ablaufobjekte von einer Ablaufgruppe (Ablaufebene, Task, Plan) zu einer anderen Ablaufgruppe zu verschieben. Sofern ein Benutzer danach nur eine der Ablaufgruppen selektiert und neu zu der Automatisierungskomponente überträgt, kann es beispielsweise vorkommen, dass das verschobene Objekt irrtümlicher Weise doppelt oder überhaupt nicht mehr in der Programmierung der Automatisierungskomponente vorhanden ist. Aus diesem Grund sind die bekannten Programmiersysteme derart eingestellt, dass bei der Vornahme kritischer Benutzeraktionen, insbesondere beim Verschieben von Ablaufobjekten zwischen den Ablaufgruppen, die "SCD"-Funktionalität abgeschaltet bzw. gesperrt wird, so dass das selektive Laden komplett verhindert. Dies bewirkt zwar, dass eine in sich "inkonsistente" Programmierung bzw. Teil-Programmierung der Automatisierungskomponenten verhindert wird, andererseits aber in vielen Fällen auch schon bei geringen Benutzereingriffen ein komplettes Neu-Übersetzen und Neu-Laden des kompletten Projektes notwendig wird.

Es ist daher eine Aufgabe der vorliegenden Erfindung, das selektive Übersetzen und Laden von Programmen für industrielle Automatisierungskomponenten zu verbessern.

Eine Kernidee der erfinderischen Lösung dieser Aufgabe ist es, bei der Programmierung industrieller Automatisierungskomponenten bei bestimmten Benutzeraktionen, insbesondere beim Verschieben von Ablaufobjekten von einer Ablaufgruppe zu einer anderen Ablaufgruppe, eine Information darüber zu speichern, welche der Ablaufgruppen sich in Bezug auf die bisher geladenen Ablaufgruppen derart geändert haben, dass diese beim Übersetzen und Laden einer der betroffenen Ablaufgruppen ebenfalls übersetzt und geladen werden müssen. Durch diese Information besteht die Möglichkeit, bei der Selektion einer Ablaufgruppe die davon abhängigen Ablaufgruppen automatisch auch zu selektieren bzw. einem Benutzer die Selektion dieser abhängigen Ablaufgruppen vorzuschlagen, womit sichergestellt wird, dass die danach geladenen Ablaufgruppen jeweils sowohl in sich als auch und zu anderen Ablaufgruppen konsistent sind.

Die Aufgabe wird insbesondere durch das Verfahren gemäß dem Patentanspruch 1 und durch das Programmiergerät gemäß dem Patentanspruch 5 gelöst.

Dabei wird ein Verfahren zur Programmierung einer industriellen Automatisierungskomponente vorgeschlagen, wobei für die Automatisierungskomponente mehrere Ablaufgruppen mit jeweiligen Ablaufobjekten mittels eines Programmiergerätes bearbeitet und nach einer Freigabe mittels eines Compilers übersetzt und zu der Automatisierungskomponente übertragen werden, wobei jede Ablaufgruppe mit den jeweiligen Ablaufobjekten separat freigebbar, übersetzbar und übertragbar ist. Dabei wird durch das Programmiergerät bei der Bearbeitung der Ablaufgruppen das Verschieben eines Ablaufobjektes von einer ersten zu einer zweiten der Ablaufgruppen registriert, wobei durch das Programmiergerät bei der Übersetzung und Übertragung einer der Ablaufgruppen eine automatische Übersetzung und Übertragung der von der Verschiebung getroffenen anderen der Ablaufgruppen vorgeschlagen oder durchgeführt wird. Dadurch wird sichergestellt, dass beim Übersetzen und Laden einer Ablaufgruppe durch zwischenzeitliche Änderungen bedingte Änderungen in anderen Ablaufgruppen ebenfalls zu einer Kompilierung und zu einem Laden dieser Ablaufgruppen führt, wodurch eine inkonsistente Programmierung der Automatisierungskomponente verhindert wird.

Die Aufgabe wird außerdem durch ein Programmiergerät gelöst, welches zur Ausführung des vorstehend genannten Verfahrens eingerichtet ist.

Vorteilhafte Ausgestaltungen des erfindungsgemäßen Verfahrens und des erfindungsgemäßen Programmiergerätes sind in den abhängigen Patentansprüchen angegeben. Die dabei beschriebenen Merkmale und Vorteile können sowohl einzeln, als auch in Kombination miteinander realisiert werden.

Eine einfache Realisierung ergibt sich, indem bei dem Verschieben des Ablaufobjekts für jede der betroffenen Ablaufgruppen, also sowohl für diejenige Ablaufgruppe, in die das Ablaufobjekt hinein verschoben wurde, als auch für diejenige Ablaufgruppe, aus der das Ablaufobjekt entfernt wurde, eine Information darüber gespeichert wird, welche weitere der Ablaufgruppen von der Verschiebung betroffen ist oder sind. Die Information kann dabei alternativ immer den Ablaufgruppen zugeordnet sein, als auch - zumindest für die das Objekt aufnehmende Ablaufgruppe - dem Objekt selbst. Die letztgenannte Möglichkeit bietet den Vorteil, dass eine erneute Verschiebung des Ablaufobjektes, die beispielsweise den ursprünglichen bzw. den aktuell auf der Automatisierungskomponente geladenen Zustand wiederherstellt, dazu führt, dass eine durch die letztgenannte Aktion wieder überflüssig gewordene Neu-Übersetzung etc. dieser Ablaufgruppe unterbleiben kann, dass also die gespeicherten Abhängigkeiten auf das notwendige Maß beschränkt bleiben bzw. wieder reduziert werden.

Ebenso ist es von Vorteil, wenn nach dem Übersetzen und Laden aller betroffenen Ablaufgruppen die jeweils gespeicherten Informationen über die weiteren betroffenen der Ablaufgruppen, also die gespeicherten Abhängigkeiten, zurückgesetzt oder gelöscht werden.

Bei häufigen Verschiebungen und anderen Aktionen können insbesondere dann Probleme auftreten, wenn in einer Ablaufgruppe, aus der ein Ablaufobjekt entfernt wurde, dieses wieder zurückverschoben wird. Der Grund liegt unter anderem darin, dass nicht nur die absolute Menge an Objekten entscheidend ist, sondern auch deren Reihenfolge und andere innere Abhängigkeiten in einer Ablaufgruppe. Um zu vermeiden, dass bei jeder Aktion alle diese Randbedingungen mitprotokolliert werden müssen, ist es von Vorteil, wenn in dem Programmiergerät Zustandsinformationen über die jeweils in der Automatisierungskomponente geladenen Ablaufgruppen und deren Ablaufobjekte gespeichert werden, wobei zumindest im Falle mehrfacher Verschiebungen von Ablaufobjekten eine Übersetzung und Übertragung einer Ablaufgruppe und deren jeweiliger Ablaufobjekte nur dann durchgeführt wird, wenn zum Zeitpunkt der Freigabe sich die im Programmiergerät bearbeitete Ablaufgruppe von der geladenen Ablaufgruppe bezüglich der jeweils enthaltenen Ablaufobjekte oder deren Reihenfolge oder hinsichtlich anderer Randbedingungen unterscheidet. Insbesondere in den Fällen, in denen eine Abhängigkeit wieder gelöscht werden soll, beispielsweise durch das "Rück-Verschieben" von Ablaufobjekten, kann dann mittels der gespeicherten Zustandsinformationen ("Ist-Zustand") automatisch mittels eines Vergleichs verifiziert werden, ob die Abhängigkeit tatsächlich zurückgesetzt oder gelöscht werden darf, oder nicht.

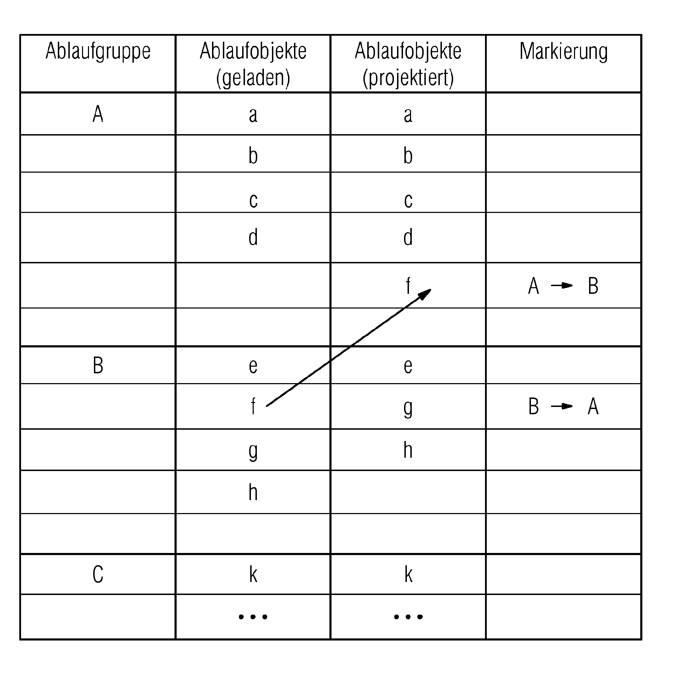

Ein Ausführungsbeispiel des erfindungsgemäßen Verfahrens wird nachfolgend anhand der Zeichnung erläutert. Es dient gleichzeitig der Erläuterung eines Ausführungsbeispiels für das erfindungsgemäße Programmiergerät.

Dabei zeigt die einzige Figur Ablaufgruppen eines Projekts für eine industrielle Automatisierungskomponente mit den geladenen und mit den projektierten Ablaufobjekten.

In der Figur sind drei Ablaufgruppen A, B, C in der ersten (linken) Spalte der Tabelle gezeigt, wobei in der nächsten Spalte die den Ablaufgruppen A, B, C zugeordneten Ablaufobjekte a, ..., k gezeigt sind. Bei diesen Ablaufobjekten a, ..., k, die in der zweiten Spalte dargestellt sind, handelt es sich um die auf der Automatisierungskomponente bereits geladenen Funktionsbausteine, Funktionen etc., also um den "Ist-Zustand". Dieser "Ist-Zustand" ist auch als Referenz in einem Programmiergerät gespeichert und soll im Folgenden der Ausgangspunkt für eine Benutzeraktion während der "Projektierung" darstellen.

Der Zustand der Ablaufgruppen A, B, C und der zugeordneten Ablaufobjekte a, ..., k während der Projektierung bzw. Programmierung ist in der dritten Spalte der Figur dargestellt. Dies bedeutet, dass die Zuordnung und die Reihenfolge der Ablaufobjekte a, ..., k während der Bearbeitung des Projekts durch einen Benutzer oder einen Programmierer einer permanenten Änderung unterworfen sein kann.

In der Figur ist durch einen Pfeil dargestellt, dass während der Bearbeitung durch einen Benutzer das Ablaufobjekt f von der Ablaufgruppe B zu der Ablaufgruppe A verschoben wird. In der Realität kann das bedeuten, dass das Ablaufobjekt f, das also eine Funktion oder eine Funktionsgruppe oder ein Teilprogramm oder ein projektierter Ablauf sein kann, nun in einem anderen Kontext, Rhythmus oder unter einer anderen Bedingung ausgeführt werden soll, als bislang.

Mit der Verschiebung des Ablaufobjektes f wird nun zu der Ablaufgruppe A eine Information ("Merker") gespeichert, die besagt, dass im Falle einer Selektion der Ablaufgruppe A für eine Übersetzung und Übertragung auch die Ablaufgruppe B mit den enthaltenen Ablaufobjekten e, g, h mitselektiert werden muss. Dies ist in der Figur in der letzten Spalte "Markierung" durch die Information "A->B" markiert; entsprechend ist der Ablaufgruppe B in derselben Spalte der Figur die Information "B->A" zugeordnet. Letzteres bedeutet, dass im Falle einer Selektion der Ablaufgruppe B für ein "selektive compile and download" ("SCD") die Ablaufgruppe A zwingend mitberücksichtigt werden muss.

In der Figur ist die optionale Ausgestaltung berücksichtigt, gemäß der bezüglich der Ablaufgruppe A die Information in der Spalte "Markierung" genau dem Ablaufobjekt f zugeordnet ist, wodurch es möglich ist, nach einem späteren Entfernen dieses Ablaufobjektes f aus der Ablaufgruppe A die diesbezügliche Abhängigkeit aus der Ablaufgruppe B zu entfernen. Dies bedeutet, dass bei einem späteren Entfernen des Ablaufobjektes f aus der Ablaufgruppe A zwar immer noch gilt, dass bei einer Selektion der Ablaufgruppe A die Ablaufgruppe B mit zu berücksichtigen ist, umgekehrt aber bei einer Selektion die Ablaufgruppe B die Ablaufgruppe A nicht mehr mitberücksichtigt werden muss, weil sich die Ablaufgruppe A nach einem späteren Entfernen des Ablaufobjektes f gegenüber dem geladenen Zustand (zweite Spalte) nicht mehr unterscheidet.

In einer optionalen Ausgestaltung kann in dem Fall, dass eine der Ablaufgruppen selektiert und danach der Vorgang des "selective compile and download" freigegeben wird, ein Vergleich aller projektierten Ablaufgruppen mit den darin enthaltenen projektierten Ablaufobjekten (dritte Spalte) mit den geladenen Ablaufgruppen und den geladenen Ablaufobjekten (zweite Spalte) vorgenommen werden, wobei dann diejenigen Ablaufgruppen mit-selektiert oder zumindest zur Selektion vorgeschlagen werden sollen, deren projektierter Zustand von dem geladenen Zustand abweicht.

Während in der Figur lediglich darauf Bezug genommen wird, ob ein Ablaufobjekt in einer Ablaufgruppe enthalten ist, oder nicht, werden in der Praxis weitere Abhängigkeiten, insbesondere die Reihenfolge der Ablaufobjekte in den Ablaufgruppen, deren Beziehungen untereinander (Verknüpfungen, Schnittstellen etc.) und andere "Randbedingungen" mit beobachtet, weil diese Bezüge und Abhängigkeiten ebenfalls Einfluss auf die Konsistenz eines geladenen Programms bzw. eines geladenen Projekts haben.

Während in diesem Ausführungsbeispiel lediglich auf Ablaufgruppen (Ablaufeinheiten, Pläne) als übergeordnete Organisationseinheit und auf Ablaufobjekte (Funktionen, Funktionsblöcke, Datenbausteine etc.) als untergeordnete Objekte eingegangen wird, kann das beschriebene Verfahren und das entsprechend ausgestaltete Programmiergerät auch in komplexer strukturierten Hierarchien vorteilhaft eingesetzt werden. Insbesondere ist eine weitere Verschachtelung möglich, die also vorsehen kann, dass die Ablaufobjekte ihrerseits wieder untergeordnete Ablaufgruppen sind, die ihrerseits wieder einzelne Objekte enthalten.

Ein weiterer, wichtiger Aspekt besteht darin, dass nach einem Übersetzen und Laden einzelner oder aller Ablaufgruppen die Informationen über den Ist-Zustand, also die zweite Spalte der in der Figur dargestellten Tabelle, ebenso aktualisiert wird, so wie die in der letzten Spalte eingetragenen Markierungen (Informationen, Merker) gelöscht oder zurückgesetzt werden müssen.

Mit dem geschilderten Verfahren und mit dem beschriebenen Programmiergerät kann sowohl verhindert werden, dass in Folge von Verschiebungen und anderen Aktionen ein inkonsistenter Zustand einer Automatisierungskomponente erzeugt wird, und andererseits verhindert werden, dass unnötig stets komplette Projekte neu übersetzt und geladen werden müssen.

## Patentansprüche

1. Verfahren zur Programmierung einer industriellen Automatisierungskomponente,
wobei für die Automatisierungskomponente mehrere Ablaufgruppen (A, B, C) mit jeweiligen Ablaufobjekten (a, ..., k) mittels eines Programmiergerätes bearbeitet und nach einer Freigabe mittels eines Compilers übersetzt und zu der Automatisierungskomponente übertragen werden,
wobei jede Ablaufgruppe (A, B, C) mit den jeweiligen Ablaufobjekten (a, ..., k) separat freigebbar, übersetzbar und übertragbar ist,
**dadurch gekennzeichnet,**
**dass** durch das Programmiergerät bei der Bearbeitung der Ablaufgruppen (A, B, C) das Verschieben eines Ablaufobjektes (a, ..., k) von einer ersten zu einer zweiten der Ablaufgruppen (A, B, C) registriert wird, und
**dass** durch das Programmiergerät bei der Übersetzung und Übertragung einer der Ablaufgruppen (A, B, C) eine automatische Übersetzung und Übertragung der von der Verschiebung getroffenen anderen der Ablaufgruppen (A, B, C) vorgeschlagen oder durchgeführt wird.

2. Verfahren nach Patentanspruch 1,
**dadurch gekennzeichnet,**
**dass** bei dem Verschieben des Ablaufobjektes (a, ..., k) für jede der betroffenen Ablaufgruppen (A, B, C) eine Information (A->B, B->A) darüber gespeichert wird, welche weitere der Ablaufgruppen (A, B, C) von der Verschiebung betroffen ist oder sind.

3. Verfahren nach Patentanspruch 2,
**dadurch gekennzeichnet,**
**dass** nach dem Übersetzen und Laden aller betroffenen Ablaufgruppen (A, B, C) die jeweils gespeicherten Informationen (A->B, B->A) über die weiteren betroffenen der Ablaufgruppen (A, B, C) zurückgesetzt oder gelöscht werden.

4. Verfahren nach einem der vorhergehenden Patentansprüche, **dadurch gekennzeichnet,**
**dass** in dem Programmiergerät Zustandsinformationen über die jeweils in der Automatisierungskomponente geladenen Ablaufgruppen (A, B, C) und deren Ablaufobjekte (a, ..., k) gespeichert werden,
wobei zumindest im Falle mehrfacher Verschiebungen von Ablaufobjekten (a, ..., k) eine Übersetzung und Übertragung einer Ablaufgruppe (A, B, C) und deren jeweiliger Ablaufobjekte (a, ..., k) nur dann durchgeführt wird, wenn zum Zeitpunkt der Freigabe sich die im Programmiergerät bearbeitete Ablaufgruppe (A, B, C) von der geladenen Ablaufgruppe (A, B, C) bezüglich der jeweils enthaltenen Ablaufobjekte (a, ..., k) oder deren Reihenfolge unterscheidet.

5. Programmiergerät zur Programmierung einer industriellen Automatisierungskomponente,
wobei das Programmiergerät zur Bearbeitung mehrere Ablaufgruppen (A, B, C) mit jeweiligen Ablaufobjekten (a, ..., k) für die Automatisierungskomponente und nach einer Freigabe mittels eines Compilers zur Übersetzung und zur Übertragung Ablaufgruppen (A, B, C) mit jeweiligen Ablaufobjekten (a, ..., k) zu der Automatisierungskomponente ausgebildet ist,
wobei eine separate Übersetzung und Übertragung der Ablaufgruppen (A, B, C) mit den jeweiligen Ablaufobjekten (a, ..., k) vorgesehen ist,
**dadurch gekennzeichnet,**
**dass** durch das Programmiergerät bei der Bearbeitung der Ablaufgruppen (A, B, C) zur Registrierung des Verschieben eines Ablaufobjektes (a, ..., k) von einer ersten zu einer zweiten der Ablaufgruppen (A, B; C) eingerichtet ist, und
**dass** durch das Programmiergerät bei der Übersetzung und Übertragung einer der Ablaufgruppen (A, B, C) das automatische Vorschlagen oder Durchführen einer Übersetzung und Übertragung der von der Verschiebung getroffenen anderen der ,n vorgesehen ist.

6. Programmiergerät nach Patentanspruch 5,
**dadurch gekennzeichnet,**
**dass** das Programmiergerät derart eingerichtet ist,
**dass** bei dem Verschieben des Ablaufobjektes (a, ..., k) für jede der betroffenen Ablaufgruppen (A, B, C) eine Information (A->B, B->A) darüber gespeichert wird, welche weiteren der Ablaufgruppen (A, B, C) von der Verschiebung betroffen ist oder sind.

7. Programmiergerät nach Patentanspruch 6,
**dadurch gekennzeichnet,**
**dass** das Programmiergerät derart eingerichtet ist,
**dass** nach dem Übersetzen und Laden der betroffenen Ablaufgruppen (A, B, C) die jeweils gespeicherten Informationen (A->B, B->A) über die weiteren betroffenen der Ablaufgruppen (A, B, C) zurückgesetzt oder gelöscht werden.

8. Programmiergerät nach einem der Patentansprüche 5 - 7, **dadurch gekennzeichnet,**
**dass** das Programmiergerät derart eingerichtet ist,
**dass** in dem Programmiergerät Zustandsinformationen über die jeweils in der Automatisierungskomponente geladenen Ablaufgruppen (A, B, C) und deren Ablaufobjekte (a, ..., k) gespeichert werden,
wobei zumindest im Falle mehrfacher Verschiebungen von Ablaufobjekten (a, ..., k) eine Übersetzung und Übertragung einer Ablaufgruppe (A, B, C) und deren jeweiliger Ablaufobjekte (a, ..., k) nur dann durchgeführt wird, wenn zum Zeitpunkt der Freigabe sich die im Programmiergerät bearbeitete Ablaufgruppe (A, B, C) von der geladenen Ablaufgruppe (A, B, C) jeweils bezüglich der jeweils enthaltenen Ablaufobjekte (a, ..., k) oder deren Reihenfolge unterscheidet.
